(19) Europäisches Patentamt
European Patent Office
Office européen des brevets

(11) EP 4 394 716 A1

(12) EUROPEAN PATENT APPLICATION
published in accordance with Art. 153(4) EPC

(43) Date of publication:
03.07.2024 Bulletin 2024/27

(51) International Patent Classification (IPC):
*G06T 17/00* (2006.01)

(21) Application number: 22934539.2

(52) Cooperative Patent Classification (CPC):
G06T 17/00

(22) Date of filing: 14.06.2022

(86) International application number:
PCT/CN2022/098739

(87) International publication number:
WO 2023/184714 (05.10.2023 Gazette 2023/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.03.2022 CN 202210326144

(71) Applicant: Huawei Technologies Co., Ltd.
Shenzhen, Guangdong 518129 (CN)

(72) Inventors:
• WANG, Yaoyuan
Shenzhen, Guangdong 518129 (CN)
• ZHANG, Ziyang
Shenzhen, Guangdong 518129 (CN)
• LI, Minglei
Shenzhen, Guangdong 518129 (CN)
• HE, Weihua
Shenzhen, Guangdong 518129 (CN)
• ZHANG, Yuhan
Shenzhen, Guangdong 518129 (CN)
• XING, Haifeng
Shenzhen, Guangdong 518129 (CN)

(74) Representative: Gill Jennings & Every LLP
The Broadgate Tower
20 Primrose Street
London EC2A 2ES (GB)

(54) METHOD AND APPARATUS FOR DRIVING VIRTUAL HUMAN TO SPEAK AND PERFORMING MODEL TRAINING, COMPUTING DEVICE, AND SYSTEM

(57) A model training method and apparatus for driving a virtual human to speak, a computing device, and a system are provided. The method includes: A computing device generates an initial virtual human speaking video based on an audio data set and a person speaking video. The computing device trains a lip synchronization parameter generation model based on the audio data set and a lip synchronization training parameter used as a model training label, where the lip synchronization parameter generation model is used to generate a lip synchronization parameter based on input audio, and the lip synchronization parameter is used to drive a virtual human to speak. The computing device expands a data amount of the lip synchronization training parameter by using the initial virtual human speaking video. This reduces difficulty in collecting training data, and ensures that the training data for the lip synchronization parameter generation model is sufficient, thereby effectively improving precision and generalization performance of the lip synchronization parameter generation model, and improving lip synchronization of the virtual human driven by the lip synchronization parameter.

Audio data set and person speaking video

Database 530

**Training device 520**

Cross-modal voice-driven virtual human model

Initial virtual human speaking video

Three-dimensional face model

Step 610a: Generate an initial virtual human speaking video

Step 620a: Generate a lip synchronization training parameter

Audio data set and lip synchronization training parameter

○ Audio data set

Training set

⊛ Lip synchronization training parameter (label)

Lip synchronization parameter generation model

Step 630a: Train the lip synchronization parameter generation model

Deploy the lip synchronization parameter generation model

Terminal-side device

Optional form

FIG. 6a

**Description**

This application claims priority to Chinese Patent Application No. 202210326144.0, filed with the China National Intellectual Property Administration on March 29, 2022 and entitled "MODEL TRAINING METHOD AND APPARATUS FOR DRIVING VIRTUAL HUMAN TO SPEAK, COMPUTING DEVICE, AND SYSTEM", which is incorporated herein by reference in its entirety.

**TECHNICAL FIELD**

This application relates to the artificial intelligence field, and in particular, to a model training method and apparatus for driving a virtual human to speak, a computing device, and a system.

**BACKGROUND**

A virtual human (Virtual Human) is a synthesized three-dimensional model that simulates an action, an expression, a pronunciation, and the like of a real person based on a virtual human technology. Currently, a collected person speaking video is used as a training set, and a model is trained based on the training set, so that the model obtains, by using a real-time voice, a parameter for driving a virtual human to speak, to obtain a virtual human speaking video. However, a large quantity of manpower and material resources are required for collecting the person speaking video, and consequently a data amount of the collected person speaking video is limited. Because the data amount of the person speaking video used as the training set is limited, precision of the model obtained through training is low, and consequently the parameter for driving a virtual human to speak that is generated by the model is inaccurate.

**SUMMARY**

Embodiments of this application provide a model training method and apparatus for driving a virtual human to speak, a computing device, and a system, so that problems that model precision is low and a generated parameter for driving a virtual human to speak is inaccurate due to a limited data amount of a training set can be resolved, thereby improving accuracy of the parameter for driving a virtual human to speak.

According to a first aspect, a model training method for driving a virtual human to speak is provided. The method may be performed by a computing device, for example, a terminal on a terminal side or a training device on a cloud side, and specifically includes the following steps: The computing device generates an initial virtual human speaking video based on an audio data set and a person speaking video, and then generates a lip synchronization parameter generation model based on the initial virtual human speaking video, so that a lip synchronization parameter generated by the lip synchronization parameter generation model can be used to drive a target virtual human to speak, thereby generating a target virtual human speaking video.

In this way, the computing device uses the initial virtual human speaking video to expand a training data amount of the lip synchronization parameter generation model. In comparison with extracting training data from a recorded real-person speaking video, duration of the real-person speaking video to be recorded is shorter, and consumption of resources such as human and material resources for recording the real-person speaking video is reduced. Therefore, the computing device may obtain a large training data amount based on a short real-person speaking video. This ensures sufficient training data of the lip synchronization parameter generation model, so that precision of a model obtained through training by the computing device is high, thereby improving generalization performance of the lip synchronization parameter generation model obtained through training, and enabling the target virtual human driven by the lip synchronization parameter output by the lip synchronization parameter generation model to have better lip synchronization.

In a possible implementation, the computing device generates the lip synchronization parameter generation model by using the initial virtual human speaking video and a three-dimensional face reconstruction model. For example, the computing device determines a lip synchronization training parameter based on the initial virtual human speaking video and the three-dimensional face reconstruction model, where the lip synchronization training parameter is used as a label for training the lip synchronization parameter generation model; and then trains the lip synchronization parameter generation model based on the audio data set and the lip synchronization training parameter, where the lip synchronization training parameter is used as the label for model training, and the audio data set is used as model input data. The lip synchronization parameter generation model is used to generate the lip synchronization parameter based on input audio. The lip synchronization parameter is used to drive the target virtual human to speak, to obtain the target virtual human speaking video.

That the computing device determines a lip synchronization training parameter based on the initial virtual human speaking video and the three-dimensional face reconstruction model may be as follows: The computing device maps a person speaking action in the initial virtual human speaking video to a three-dimensional face model, and extracts the lip synchronization training parameter from the three-dimensional face model. Therefore, when definition of the initial virtual human speaking video is lower than definition of the target virtual human speaking video, it is avoided that the lip synchronization training parameter is directly extracted from a low-definition video. This ensures precision of the lip synchronization training parameter, and further improves precision of the lip synchronization parameter generation model.

In a possible implementation, that the computing device generates an initial virtual human speaking video based on an audio data set and a person speaking video may include: inputting the audio data set and the person speaking video into a pre-training model, to obtain the initial virtual human speaking video in which a person in the person speaking video is driven to speak based on a voice in the audio data set, where duration of the person speaking video is less than duration of the voice in the audio data set. The computing device can quickly and simply generate, by using the pre-training model, an initial virtual human speaking video with a large data amount based on a plurality of lingual voices, a plurality of tone voices, and a plurality of content voices in the audio data set, to expand a data amount of the training data. For example, the pre-training model may be a network model of a cross-modal voice-driven face action. In addition, the definition of the initial virtual human speaking video is lower than the definition of the virtual human speaking video that needs to be generated, thereby reducing computing resource overheads for processing the video by the computing device.

In a possible implementation, the pre-training model is used to extract a person speaking feature from the person speaking video, and output the initial virtual human speaking video based on the audio data set and the person speaking feature. The person speaking feature is a face feature when a person speaks in a person speaking image.

Optionally, the computing device may preprocess the person speaking video by using the pre-training model to obtain the person speaking feature. For example, the computing device crops a face area of the person in the person speaking video to obtain a face video, and then extracts a feature from the face video to obtain the person speaking feature. The computing device uses the preprocessing step to reserve a face action of the person speaking action in the person speaking video. This ensures precision of the person speaking feature, and improves accuracy of the lip synchronization parameter generation model obtained through training.

In a possible implementation, the audio data set includes a plurality of lingual voices, a plurality of tone voices, and a plurality of content voices. Recording of the audio data set does not require attention to a sitting posture, an expression, and an action of a recorded real-person, and an illumination condition, and has a lower requirement for recording of data than that of a video. In comparison with a real-person speaking video, collection of the audio data set is faster and simpler, so that a large quantity of audio data sets can be quickly collected. This reduces difficulty in collecting training data. The audio data set includes voice data of different languages, tones, and content. This ensures diversity of training data, and improves a generalization capability of the lip synchronization parameter generation model.

For example, the voice data in the audio data set may be obtained by recording speaking of the person, or may be obtained from a local database of a network or the computing device.

For another example, in the audio data set, in addition to the voice data obtained from the database or obtained through recording, the audio data set may further include voice data in the person speaking video. In this way, the diversity of the training data is ensured, and the generalization capability of the lip synchronization parameter generation model is improved. In addition, the audio data set may further include audio in the person speaking video, to further expand the training set of the lip synchronization parameter generation model.

Both the lip synchronization training parameter and the lip synchronization parameter are a same type of parameters that indicate expression actions of the three-dimensional face model.

For example, the lip synchronization training parameter may include an eye feature parameter and a lip feature parameter. The eye feature parameter may include parameters that indicate eye actions such as eye opening, eye closing, an eye-opening size, and an eye viewing direction. The lip feature parameter may include parameters that indicate mouth actions such as mouth opening, mouth closing, and a mouth opening size.

For another example, the lip synchronization training parameter may further include a head feature parameter, an eyebrow feature parameter, and the like.

The lip synchronization training parameter includes feature parameters of a plurality of parts of a face. This helps improve diversity of a virtual human speaking action and enhance generalization performance of the lip synchronization parameter generation model.

According to a second aspect, a method for driving a virtual human to speak is provided. The method may be performed by a computing device, for example, a terminal on a terminal side, and specifically includes the following steps: The computing device obtains input audio and a person speaking video with first definition, and inputs the input audio into a lip synchronization parameter generation model, to obtain a target virtual human speaking video. A training set of the lip synchronization parameter generation model and the target virtual human speaking video are obtained based on a video that includes the person speaking video with first definition, and the first definition is lower than definition of the target virtual human speaking video. Optionally, the person speaking video with first definition is an initial virtual human speaking video. In comparison with a model obtained through training by using a recorded real-person video, a data amount of training data of the lip synchronization parameter generation model is larger, and therefore precision and generalization performance of the lip synchronization parameter generation model obtained through training are better. Therefore, precision of a lip synchronization parameter output by the lip synchronization parameter generation model is high, and lip synchronization of a virtual human driven by the computing device based on the lip synchronization parameter is high.

For example, the step of generating the target virtual human speaking video may be that the computing device obtains the lip synchronization parameter output by the lip synchronization parameter generation model, and drives a target virtual human to speak based on the lip synchronization parameter, to obtain the target virtual human speaking video.

In a possible implementation, in a process in which the lip synchronization parameter generation model outputs the lip synchronization parameter based on the input audio, the computing device may further update the lip synchronization parameter generation model. For example, the computing device generates the initial virtual human speaking video based on the input audio and the target virtual human speaking video, where duration of the initial virtual human speaking video is greater than duration of the target virtual human speaking video, and then the computing device updates the lip synchronization parameter generation model by using the initial virtual human speaking video. Therefore, a generalization ability and precision of the lip synchronization parameter generation model are improved.

According to a third aspect, a model training apparatus for driving a virtual human to speak is provided. The apparatus includes a video generation module and a training module. The video generation module is configured to generate an initial virtual human speaking video based on an audio data set and a person speaking video, where duration of the initial virtual human speaking video is greater than duration of the person speaking video. The training module is configured to generate a lip synchronization parameter generation model by using the initial virtual human speaking video, where the lip synchronization parameter generation model is used to obtain a target virtual human speaking video, and definition of the initial virtual human speaking video is lower than definition of the virtual human speaking video.

In a possible implementation, the training module is specifically configured to generate the lip synchronization parameter generation model by using the initial virtual human speaking video and a three-dimensional face reconstruction model.

In a possible implementation, the training module is specifically configured to: extract a lip synchronization training parameter from the initial virtual human speaking video by using the three-dimensional face reconstruction model; and obtain the lip synchronization parameter generation model through training by using the lip synchronization training parameter as a label and using the audio data set as model input data.

In a possible implementation, the video generation module is specifically configured to input the audio data set and the person speaking video into a pre-training model, to obtain the initial virtual human speaking video in which a person in the person speaking video is driven to speak based on a voice in the audio data set, where duration of the person speaking video is less than duration of the voice in the audio data set.

In a possible implementation, the pre-training model is used to extract a person speaking feature from the person speaking video, and output the initial virtual human speaking video based on the audio data set and the person speaking feature.

In a possible implementation, the duration of the person speaking video is less than or equal to 5 minutes, and the duration of the initial virtual human speaking video is greater than or equal to 10 hours.

In a possible implementation, the audio data set includes a plurality of lingual voices, a plurality of tone voices, and a plurality of content voices.

In a possible implementation, a lip synchronization parameter includes an eye feature parameter and a lip feature parameter.

In a possible implementation, the audio data set includes audio in the person speaking video.

According to a fourth aspect, an apparatus for driving a virtual human to speak is provided. The apparatus includes an input module and a model processing module. The input module is configured to obtain input audio and a target virtual human. The model processing module is configured to generate a target virtual human speaking video based on the input audio by using a lip synchronization parameter generation model, where a training set of the lip synchronization parameter generation model is obtained based on a video that includes a person speaking video with first definition and a three-dimensional face reconstruction model, and the first definition is lower than definition of the target virtual human speaking video.

In a possible implementation, the apparatus for driving a virtual human to speak further includes: a training module, configured to update the lip synchronization parameter generation model based on the input audio.

For example, the training module is specifically configured to: generate an initial virtual human speaking video based on the input audio and the target virtual human speaking video, where duration of the initial virtual human speaking video is greater than duration of the target virtual human speaking video; and update the lip synchronization parameter generation model by using the initial virtual human speaking video.

It should be noted that the model training apparatus for driving a virtual human to speak in the third aspect or the apparatus for driving a virtual human to speak in the fourth aspect may be a terminal device or a network device, or may be a chip (system) or another part or component that may be disposed in the terminal device or the network device, or may be an apparatus including the terminal device or the network device. This is not limited in this application.

In addition, for a technical effect of the model training apparatus for driving a virtual human to speak in the third aspect, refer to the technical effect of the model training method for driving a virtual human to speak in the first aspect. For a technical effect of the apparatus for driving a virtual human to speak in the fourth aspect, refer to the technical effect of the method for driving a virtual human to speak in the second aspect. Details are not described herein again.

According to a fifth aspect, a computing device is provided. The computing device includes a memory and a processor. The memory is configured to store a group of computer instructions; and when executing the group of computer instructions, the processor is configured to perform operation steps of the model training method for driving a virtual human to speak in any possible design of the first aspect, or perform operation steps of the method for driving a virtual human to speak in any possible design of the second aspect.

In addition, for a technical effect of the computing device in the fifth aspect, refer to the technical effect of the model training method for driving a virtual human to speak in the first aspect, or refer to the technical effect of the method for driving a virtual human to speak in the second aspect. Details are not described herein again.

According to a sixth aspect, a system for driving a virtual human to speak is provided. The system for driving a virtual human to speak includes a training device and at least one terminal. The at least one terminal is connected to the training device. The training device is configured to perform operation steps of the model training method for driving a virtual human to speak in any possible implementation of the first aspect, and the at least one terminal is configured to perform operation steps of the method for driving a virtual human to speak in any possible implementation of the second aspect.

According to a seventh aspect, a computer-readable storage medium is provided. The computer-readable storage medium includes computer software instructions; and when the computer software instructions are run in a data processing system, a system for driving a virtual human to speak is enabled to perform operation steps of the method in any possible implementation of the first aspect or the second aspect.

According to an eighth aspect, a computer program product is provided. When the computer program product runs on a computer, a data processing system is enabled to perform operation steps of the method in any possible implementation of the first aspect or the second aspect.

In this application, the implementations provided in the foregoing aspects may be further combined to provide more implementations.

## BRIEF DESCRIPTION OF DRAWINGS

FIG. 1 is a schematic diagram of a structure of a neural network according to an embodiment of this application;

FIG. 2 is a schematic diagram of a structure of a convolutional neural network according to an embodiment of this application;

FIG. 3 is a schematic diagram of a structure of a virtual human generation model according to an embodiment of this application;

FIG. 4 is a schematic diagram of a virtual human construction periodicity according to an embodiment of this application;

FIG. 5 is a schematic diagram of an architecture of a system for driving a virtual human to speak according to an embodiment of this application;

FIG. 6a is a schematic diagram of a model training method for driving a virtual human to speak according to an embodiment of this application;

FIG. 6b is a schematic diagram of another model training method for driving a virtual human to speak according to an embodiment of this application;

FIG. 7 is a schematic diagram of a method for driving a virtual human to speak according to an embodiment of this application;

FIG. 8 is a schematic diagram of a model training apparatus for driving a virtual human to speak according to an embodiment of this application;

FIG. 9 is a schematic diagram of an apparatus for driving a virtual human to speak according to an embodiment of this application; and

FIG. 10 is a schematic diagram of a structure of a computing device according to an embodiment of this application.

## DESCRIPTION OF EMBODIMENTS

For ease of understanding, the following first describes related concepts such as related terms and neural networks in embodiments of this application.

(1) Neural network

The neural network may include a neuron. The neuron may be an operation unit that uses $x_s$ and an intercept of 1 as an input. An output of the operation unit satisfies Formula (1):

$$h_{W,b}(x) = f(W^T x) = f(\sum\nolimits_{s=1}^{n} W_s x_s + b) \qquad \text{Formula (1)}$$

Herein, s=1, 2, ..., or n, where n is a natural number greater than 1, $W_s$ is a weight of $x_s$, b is bias of the neuron, and $f$ is an activation function (activation function) of the neuron, and is used to introduce a non-linear characteristic into the neural network, to convert an input signal in the neuron into an output signal. The output signal of the activation function may be used as an input of a next layer, and the activation function may be a sigmoid function. The neural network is a network formed by connecting a plurality of single neurons, that is, an output of one neuron may be an input of another neuron. An input of each neuron may be connected to a local receptive field of a previous layer, to extract a feature of the local receptive field. The local receptive field may be a region including several neurons. A weight represents strength of a connection between different neurons. The weight determines impact of the input on the output. When the weight is close to 0, it means to change the input but not to change the output. When the weight is negative, it means to increase the input but decrease the output.

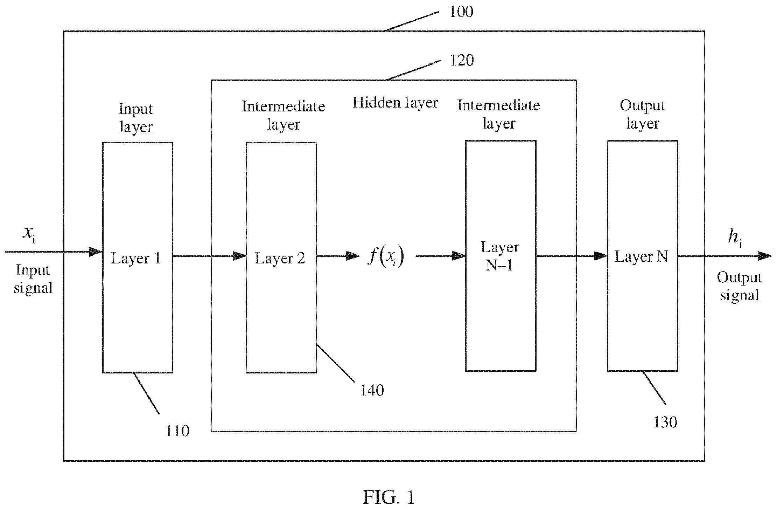

FIG. 1 is a schematic diagram of a structure of a neural network according to an embodiment of this application. The neural network 100 includes N processing layers, and N is an integer greater than or equal to 3. The first layer of the neural network 100 is an input layer 110, which is responsible for receiving an input signal. The last layer of the neural network 100 is an output layer 130, which is responsible for outputting a processing result of the neural network. The other layers than the first layer and the last layer are intermediate layers 140. These intermediate layers 140 jointly form a hidden layer 120. Each intermediate layer 140 of the hidden layer 120 can not only receive an input signal, but also can output a signal. The hidden layer 120 is responsible for processing an input signal. Each layer represents one level of logical signal processing. Through a plurality of layers, a data signal may encounter a plurality of levels of logical processing.

In some feasible embodiments, the input signal in the neural network may be various signals, for example, a video signal, a voice signal, a text signal, an image signal, or a temperature signal. The voice signal may be various sensor signals, for example, an audio signal of a voice, such as speaking or singing by a person, that is recorded by a microphone (a sound sensor). The input signal in the neural network further includes various other engineering signals that can be processed by a computer, which are not enumerated herein. If deep learning is performed on an image signal by using the neural network, quality of an image processed by using the neural network can be improved.

(2) Convolutional neural network

The convolutional neural network (Convolutional Neuron Network, CNN) is a deep neural network with a convolutional structure. The convolutional neural network includes a feature extractor including a convolutional layer and a sub-sampling layer. The feature extractor may be considered as a filter. A convolution process may be considered as performing convolution by using a trainable filter and an input image or a feature map (feature map). The convolutional layer is a neuron layer that is in the convolutional neural network and at which convolution processing is performed on an input signal. At the convolutional layer of the convolutional neural network, one neuron may be connected only to some neurons of an adjacent layer. One convolutional layer may output several feature maps, and the feature map may be an intermediate result in a convolutional neural network operation process. Neurons of a same feature map share a weight, and the shared weight herein is a convolution kernel. Weight sharing may be understood as that an image information extraction manner is irrelevant to a location, that is, statistical information of a part of the image is the same as that of another part. In other words, image information learned from a part can also be used in another part. Therefore, the same image information obtained through learning can be used for all locations on the image. At a same convolutional layer, a plurality of convolution kernels may be used to extract different image information. Usually, a larger quantity of convolution kernels indicates richer image information reflected by a convolution operation.

The convolution kernel may be initialized in a form of a randomly-sized matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

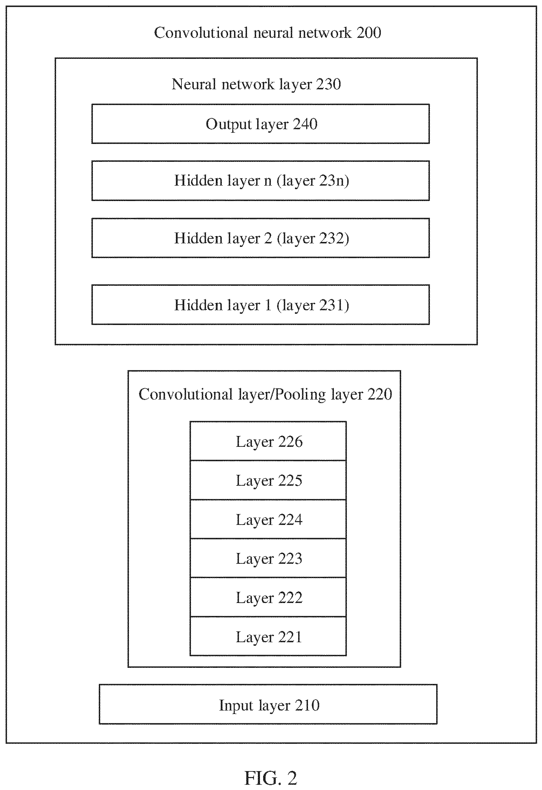

For example, FIG. 2 is a schematic diagram of a structure of a convolutional neural network according to an embodiment of this application. The convolutional neural network 200 may include an input layer 210, a convolutional layer/pooling layer 220 (where the pooling layer is optional), and a neural network layer 230.

The convolutional layer/pooling layer 220 may include, for example, a layer 221 to a layer 226. In an example, the layer 221 may be, for example, a convolutional layer, the layer 222 may be, for example, a pooling layer, the layer 223 may be, for example, a convolutional layer, the layer 224 may be, for example, a pooling layer, the layer 225 may be, for example, a convolutional layer, and the layer 226 may be, for example, a pooling layer. In another example, the layer 221 and the layer 222 may be, for example, convolutional layers, the layer 223 may be, for example, a pooling layer, the layer 224 and the layer 225 may be, for example, convolutional layers, and the layer 226 may be, for example, a pooling layer. That is, an output of a convolutional layer may be used as an input of a subsequent pooling layer, or may be used as an input of another convolutional layer, to continue to perform a convolution operation.

The following describes internal working principles of the convolutional layer by using the convolutional layer 221 as an example.

The convolutional layer 221 may include a plurality of convolution operators, and the convolution operator may also be referred to as a kernel. A function of the convolution operator is equivalent to a filter that extracts specific information from an input image matrix. The convolution operator may be essentially a weight matrix, and the weight matrix is usually predefined. A size of the weight matrix is related to a size of the image. It should be noted that a depth dimension (depth dimension) of the weight matrix is the same as a depth dimension of the input image. In a process of performing the convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional image. Different weight matrices may be used to extract different features from the image. For example, one weight matrix is used to extract edge information of the image, another weight matrix is used to extract a specific color of the image, and still another weight matrix is used to blur unnecessary noise in the image. The plurality of weight matrices have the same size (rows×columns), and convolutional feature maps extracted by the plurality of weight matrices with the same size have a same size. Then, the plurality of extracted convolutional feature maps with the same size are combined to form an output of the convolution operation.

Weight values in these weight matrices need to be obtained through a large amount of training during actual application. Each weight matrix formed by using the weight values obtained through training may be used to extract information from an input image, to enable the convolutional neural network 200 to perform correct forecasting.

When the convolutional neural network 200 has a plurality of convolutional layers, a large quantity of general features are usually extracted from an initial convolutional layer (for example, the layer 221), and the general feature may also be referred to as a low-level feature. As a depth of the convolutional neural network 200 deepens, features extracted from a subsequent convolutional layer (for example, the layer 226) become increasingly complex, for example, features with high-level semantics. A feature with higher semantics is more applicable to a to-be-resolved problem.

Because a quantity of training parameters usually needs to be reduced, the pooling layer usually needs to be periodically introduced after the convolutional layer. At the layer 221 to the layer 226 shown in the convolutional layer/pooling layer 220 in FIG. 2, one convolutional layer may be followed by one pooling layer, or a plurality of convolutional layers may be followed by one or more pooling layers. During image or audio processing, the pooling layer is only used for reducing a space size of the image. The pooling layer may include an average pooling operator and/or a maximum pooling operator, to perform sampling on an input image to obtain an image with a small size. The average pooling operator may be used perform computing on pixel values in the image in a specific range, to generate an average value, and the average value is used as an average pooling result. The maximum pooling operator may be used to select, in a specific range, a pixel with a maximum value in the range as a maximum pooling result. In addition, similar to that the size of the weight matrix at the convolutional layer needs to be related to the size of the image, an operator at the pooling layer also needs to be related to the size of the image. A size of an image output after processing from the pooling layer may be less than a size of an image input into the pooling layer. Each pixel in the image output from the pooling layer represents an average value or a maximum value of a corresponding sub-region of the image input into the pooling layer.

After processing performed at the convolutional layer/pooling layer 220, the convolutional neural network 200 still cannot output required output information. As described above, at the convolutional layer/pooling layer 220, a feature is extracted, and parameters brought by an input image are reduced. However, to generate final output information (required class information or other related information), the convolutional neural network 200 needs to use the neural network layer 230 to generate an output of one required class or a group of required classes. Therefore, the neural network layer 230 may include a plurality of hidden layers (hidden layers 231, 232, ..., and 23n shown in FIG. 2) and an output layer 240. Parameters included in the plurality of hidden layers may be obtained through pre-training based on related training data of a specific task type. For example, the task type may include image recognition, image classification, super-resolution image reconstruction, and the like.

The plurality of hidden layers in the neural network layer 230 are followed by the output layer 240, namely, the last layer of the entire convolutional neural network 200. The output layer 240 has a loss function similar to a categorical cross-entropy, and is specifically configured to compute a forecasting error. Once forward propagation (for example, propagation in a direction from the layer 210 to the layer 240 in FIG. 2 is forward propagation) of the entire convolutional neural network 200 is completed, back propagation (for example, propagation in a direction from the layer 240 to the layer 210 in FIG. 2 is back propagation) starts to update the weight value and a deviation of each layer mentioned above, to reduce a loss of the convolutional neural network 200 and an error between a result output by the convolutional neural network 200 through the output layer and an ideal result.

It should be noted that the convolutional neural network 200 shown in FIG. 2 is merely used as an example of a convolutional neural network. During specific application, the convolutional neural network may alternatively exist in a form of another network model, for example, a U-Net, a morphable face model (3D Morphable Face Model, 3DMM), and a residual network (Residual Network, ResNet).

(3) Recurrent neural network

The recurrent neural network (RNN, Recurrent Neural Network) is used to process sequence data. In a conventional neural network model, layers from an input layer to a hidden layer and to an output layer are fully connected, and nodes at each layer are not connected. Although this common neural network has resolved a plurality of problems, it is still incapable of resolving a plurality of problems. For example, to forecast a next word in a sentence, a previous word usually needs to be used, because the previous word and the next word in the sentence are not independent. A reason why the RNN is referred to as a recurrent neural network is that a current output of a sequence is related to a previous output. A specific representation is that the network memorizes previous information and applies the information to computing of the current output. To be specific, nodes at the hidden layer are no longer not connected but connected. In addition, an input at the hidden layer includes not only an output at the input layer but also an output at the hidden layer at a previous moment. Theoretically, the RNN can process sequence data of any length. Training of the RNN is the same as training of a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends not only on a network in a current step, but also on a network status in several previous steps. The learning algorithm is referred to as a back propagation through time Back propagation Through Time (BPTT) algorithm.

Why is a recurrent neural network still needed if a convolutional neural network already exist? The reason is simple. In the convolutional neural network, there is a premise that elements are independent of each other, and an input and an output are also independent, for example, a cat and a dog. However, in the real world, a plurality of elements are interconnected. For example, stocks change over time. For another example, a person says: "I like traveling, a most favorite place is Yunnan, and I will go there in the future if there is a chance." Herein, people should know that the person will go to "Yunnan". Because people perform inference from the context. However, how do machines do that? Then, the RNN emerges. The RNN is designed to enable a machine to have a capability to remember like human beings. Therefore, an output of the RNN depends on current input information and historical memory information.

In a specific application, the recurrent neural network may exist in a form of various network models, for example, a long short term memory network (Long Short Term Memory Network, LSTM) or a deep learning-based end-to-end voice synthesis model (Char2Wav).

(4) Generative adversarial network

The generative adversarial network (GAN, Generative Adversarial Network) is a deep learning model. The model includes at least two modules. One module is a generative model (Generative Model), and the other module is a discriminative model (Discriminative Model). The two modules are learned through gaming with each other, to generate a better output. Both the generative model and the discriminative model may be neural networks, and may be specifically deep neural networks or convolutional neural networks. Abasic principle of the GAN is as follows: A GAN for generating an image is used as an example. It is assumed that there are two networks: G (Generator) and D (Discriminator). G is a network for generating an image. G receives random noise z, and generates an image based on the noise, where the image is recorded as G(z). D is a discriminative network, and is used to discriminate whether an image is "real". An input parameter of D is x, x represents an image, and output D(x) represents a probability that x is a real image. If a value of D(x) is 1, it indicates that the image is 100% real. If the value of D(x) is 0, it indicates that the image cannot be real. In a process of training the generative adversarial network, an objective of the generative network G is to generate an image that is as real as possible to deceive the discriminative network D, and an objective of the discriminative network D is to distinguish between the image generated by G and a real image as much as possible. In this way, G and D constitute a dynamic "gaming" process, namely, "adversary" in the "generative adversarial network". A final gaming result is that in an ideal state, G may generate an image G(z) that is "to be difficultly distinguished from a real image", and it is difficult for D to determine whether the image generated by G is real, that is, D(G(z))=0.5. In this way, an excellent generative model G is obtained, and G may be used to generate an image.

In a specific application, a generative adversarial network may exist in a form of various network models, for example, a lip synthesis model (wave2lip) based on the generative adversarial network, where the lip synthesis model is used to implement synchronization between a mouth shape and input audio in a dynamic image. Another example is the Pix2Pix network using the U-Net network structure.

(5) Loss function

In a process of training a deep neural network, because it is expected that an output of the deep neural network is as close as possible to a value that is actually expected to forecast, a current forecasted value of the network and a target value that is actually expected may be compared, and then a weight vector of each layer of the neural network is updated based on a difference between the current forecasted value and the target value (where certainly, there is usually an initialization process before the first update, to be specific, parameters are preconfigured for all layers of the deep neural network). For example, if the forecasted value of the network is large, the weight vector is adjusted to decrease the forecasted value, and adjustment is continuously performed, until the deep neural network can forecast the actually expected target value or a value that is very close to the target value that is actually expected. Therefore, "how to obtain the difference between the forecasted value and the target value through comparison" needs to be predefined. This is a loss function (loss function) or an objective function (objective function). The loss function and the objective function are important equations for measuring the difference between the forecasted value and the target value. The loss function is used as an example. A higher output value (loss) of the loss function indicates a larger difference. Therefore, training of the deep neural network is a process of minimizing the loss as much as possible.

(6) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

(7) Cross-modal driving

A modal is an existence form of data, for example, a file format such as a text, audio, an image, or a video. Some data exists in different forms, but all data describes a same object or event. For example, in a person speaking video, a voice and an action image when a person speaks a word are both data of the person speaking the word. Cross-modal driving means that data of one modal is used to generate data of another modal. For example, voice data of reading text data by a person is generated based on the text data, or a speaking video of a voice, in voice data, that is spoken by a person is generated based on the voice data.

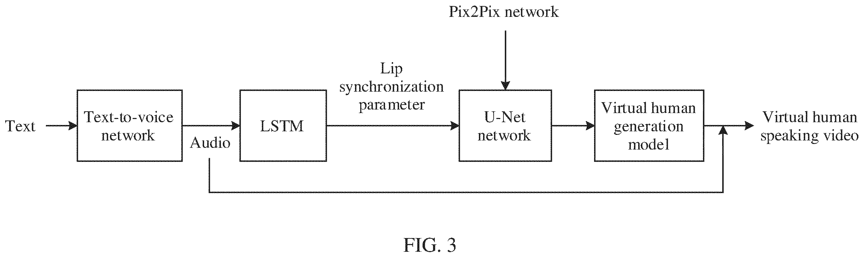

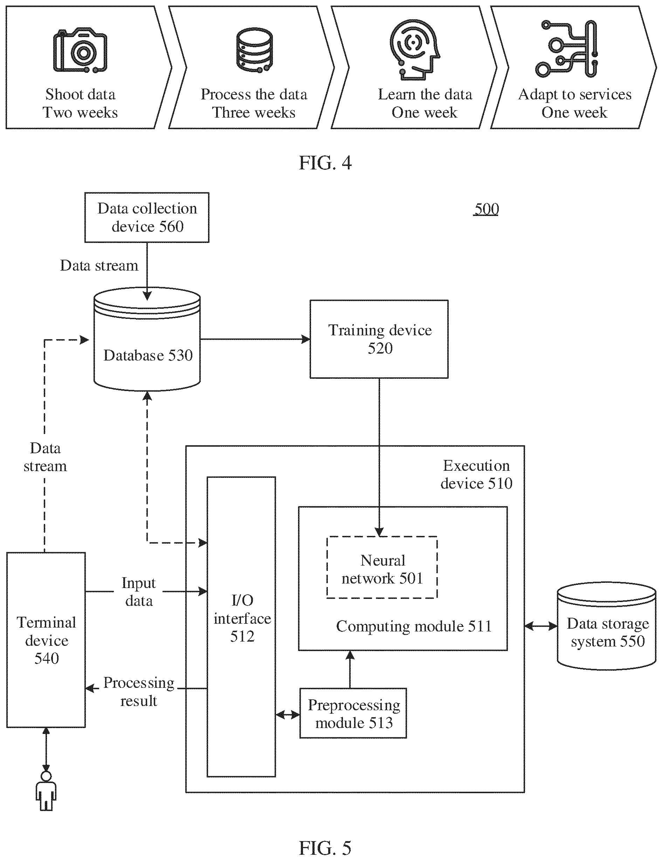

The following describes a manner of constructing a virtual human in the conventional technology with reference to FIG. 3 and FIG. 4.

As shown in FIG. 3, an Obama network (ObamaNet) is a virtual human generation model dedicated to a particular image. A step of constructing a virtual human based on the ObamaNet may include processes of shooting, voice processing, transcription processing, acceptance, and the like. A customer-specific virtual human model is developed and provided, thereby developing the customer-specific virtual human model.

The ObamaNet mainly includes a Char2Wav-based text-to-voice network, an LSTM for generating a lip synchronization parameter (Keypoints) related to audio synchronization, and a virtual human generation model for generating a virtual human speaking video by using the lip synchronization parameter. The virtual human generation model is a Pix2Pix network using a U-Net network structure.

A working process of the ObamaNet is as follows: A computing device obtains a text, implements text-to-voice conversion through the text-to-voice network, converts a voice into the lip synchronization parameter that drives a virtual human to speak through the LSTM, and inputs the lip synchronization parameter into the virtual human generation model, to generate the final virtual human speaking video. The process of constructing the virtual human model is supervised training, and a large quantity of real-person speaking videos and audio are required to train the virtual human that can adapt to any text (audio). Therefore, a periodicity for constructing the virtual human based on the Obama network is long. For example, for the periodicity for constructing the virtual human based on the Obama network, refer to FIG. 4. The production periodicity for constructing the virtual human may include: two weeks for shooting data (collecting data such as photos and audio), three weeks for processing data (converting a text into a voice), one week for learning data (training a deep learning neural network), and one week for adapting to services (configuring a model and providing a data interface of the virtual human model).

The following problems still exist in the construction of the virtual human based on the ObamaNet: (1) A large quantity of training materials need to be shot, a shooting periodicity is long, and shooting costs are high. In a shooting process, a sitting posture, an expression, an action, and a background of a model are strictly required. A speaker needs to pay attention to that the person cannot perform an expression action with a large body activity during recording, for example, drinking water or turning the head, and a face illumination condition needs to be considered during recording. (2) When a specific image is manually collected, even if a large quantity of human and material resources are invested, it is still difficult to obtain training data of a sufficient data amount. Therefore, due to a limitation of training data, a model generalization capability is poor, and lip synchronization effect of the generated virtual human speaking video is poor.

This application provides a model training method for driving a virtual human to speak, and in particular, provides a model training method for driving a virtual human to speak by expanding training data based on an audio data set. To be specific, after generating an initial virtual human speaking video based on the audio data set and a person speaking video, a computing device determines a lip synchronization training parameter based on the initial virtual human speaking video, and then computing device uses the lip synchronization training parameter as a label, and trains a lip synchronization parameter generation model based on the audio data set and the lip synchronization training parameter. In this way, the computing device expands the training data of the lip synchronization parameter generation model based on the initial virtual human speaking video generated by the audio data set. In comparison with extracting training data from a recorded real-person speaking video, this reduces difficulty in collecting the training data and time consumption of collecting the training data, and the computing device can obtain more training data in short time, thereby improving precision and generalization performance of the lip synchronization parameter generation model obtained through training by using the lip synchronization training parameter.

The following describes implementations of embodiments of this application in detail with reference to the accompanying drawings.

FIG. 5 is a schematic diagram of an architecture of a system for driving a virtual human to speak according to an embodiment of this application. As shown in FIG. 5, the system 500 includes an execution device 510, a training device 520, a database 530, a terminal device 540, a data storage system 550, and a data collection device 560.

The execution device 510 may be a terminal, for example, a mobile phone terminal, a tablet computer, a notebook computer, a virtual reality (virtual reality, VR) device, an augmented reality (augmented reality, AR) device, a mixed reality (Mixed Reality, MR) device, an extended reality (Extended Reality, ER) device, a camera, or a vehicle-mounted terminal, or may be an edge device (for example, a box carrying a processing capability chip), or the like.

The training device 520 may be a terminal, or may be another computing device such as a server or a cloud device.

In a possible embodiment, the execution device 510 and the training device 520 are different processors deployed on different physical devices (for example, a server or a server in a cluster). For example, the execution device 510 may be a graphics processing unit (graphic processing unit, GPU), a central processing unit (central processing unit, CPU), another general-purpose processor, a digital signal processor (digital signal processing, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. The training device 520 may be a graphics processing unit (graphics processing unit, GPU), a neural network processing unit (neural network processing unit, NPU), a microprocessor, an application-specific integrated circuit (application-specific integrated circuit, ASIC), or one or more integrated circuits configured to control program execution in the solutions of this application.

In another possible embodiment, the execution device 510 and the training device 520 are deployed on a same physical device, or the execution device 510 and the training device 520 are a same physical device.

The data collection device 560 is configured to collect training data, and store the training data in the database 530. The data collection device 560, the execution device 510, and the training device 520 may be a same device or different devices. The training data includes data in at least one form of an image, a voice, or a text. For example, the training data includes training audio and a target in the training audio, and the target in the training audio may be a label of the training audio.

The training device 520 is configured to train a neural network by using the training data, until a loss function in the neural network converges; and if a value of the loss function is less than a specific threshold, training of the neural network is completed, so that the neural network reaches specific precision. Alternatively, if all training data in the database 530 is used for training, training of the neural network is completed, so that the neural network that is trained has functions such as cross-modal driving of a virtual human and generation of a lip synchronization parameter. Further, the training device 520 configures the trained neural network 501 to the execution device 510. The execution device 510 is configured to implement a function of processing application data based on the trained neural network 501.

In some embodiments, the execution device 510 and the training device 520 are a same computing device. The computing device may configure the trained neural network 501 to the computing device, and implement the functions such as the cross-modal driving of the virtual human and the generation of the lip synchronization parameter through the trained neural network 501.

In some other embodiments, the training device 520 may configure the trained neural network 501 to a plurality of execution devices 510. Each execution device 510 implements the functions such as the cross-modal driving of the virtual human and the generation of the lip synchronization parameter through the trained neural network 501.

With reference to the system 500 for driving a virtual human to speak, the model training method for driving a virtual human to speak provided in this embodiment can be applied to a cross-modal driving scenario. Specifically, the model training method in this embodiment of this application can be applied to a scenario in which a terminal produces a dynamic image, a scenario in which a virtual image is live broadcast through a network, and the like. The following briefly describes the scenario in which the terminal produces the dynamic image and the scenario in which the virtual image is live broadcast through the network.

For example, in the scenario in which the terminal produces the dynamic image, a user obtains an audio data set and a person speaking video through the training device 520 (for example, a mobile phone, a computer, or a tablet computer), where the audio data set and the person speaking video may be obtained by the training device 520 by downloading from a network database or recording speaking of a real person, and the audio data set may include person speaking audio. The user operates the training device 520 to obtain a lip synchronization parameter generation model based on the audio data set and the person speaking video. The training device 520 generates an initial virtual human speaking video based on the audio data set and a person speaking feature in the person speaking video; determines a lip synchronization training parameter based on the initial virtual human speaking video; and trains the lip synchronization parameter generation model by using the lip synchronization training parameter as a label and using the audio data set as training data.

Because the training device 520 uses the initial virtual human speaking video to expand a data amount of the lip synchronization training parameter, in comparison with extracting a lip synchronization training parameter from a recorded real-person speaking video, duration of the real-person speaking video to be recorded is shorter, and a data amount of the person speaking video that needs to be obtained or recorded by the training device 520 is smaller. In addition, the training device 520 generates the lip synchronization training parameter based on the initial virtual human speaking video. Because the lip synchronization training parameter is used as a label for model training, a requirement for definition of the initial virtual human speaking video is low. The training device 520 generates the lip synchronization training parameter based on the initial virtual human speaking video with low definition. This reduces a computing amount and increases a processing speed for generating the label. Therefore, a terminal, for example, a mobile phone, a computer, and a tablet computer, whose processing capability is weaker than that of a dedicated graphics and audio processing server can also be used as the training device 520 to train the lip synchronization parameter generation model.

For example, in the scenario in which the virtual image is live broadcast through the network, an operator uses the training device 520 (for example, a cloud device or a server) to obtain an audio data set and a person speaking video, where the audio data set and the person speaking video may be obtained by the training device 520 by downloading from a network database or recording speaking of a real person, and the audio data set may include person singing audio. The step in which the operator operates the training device 520 to obtain a lip synchronization parameter generation model based on the audio data set and the person speaking video is the same as the step in which the lip synchronization parameter generation model is obtained in the scenario in which the terminal produces the dynamic image. Details are not described herein again.

The model training method in this embodiment of this application is applied to the scenario in which the virtual image is live broadcast through the network. The training device 520 needs to obtain or record a small data amount of the person speaking video, and a computing amount is small and a processing speed is fast for generating the label. This improves construction efficiency of the lip synchronization parameter generation model, and reduces model training costs. In addition, the training device 520 generates a lip synchronization training parameter based on the initial virtual human speaking video. This ensures sufficient training data of the lip synchronization parameter generation model, and can improve generalization performance and accuracy of the lip synchronization parameter generation model.

It should be noted that, in an actual application, the training data (for example, the audio data set and the person speaking video) maintained in the database 530 is not necessarily from the data collection device 560, and may alternatively be received from another device. In addition, the training device 520 does not necessarily train the neural network completely based on the training data maintained by the database 530, and may alternatively obtain the training data from the cloud or another place to train the neural network. The foregoing descriptions should not be construed as a limitation on this embodiment of this application.

Further, according to a function performed by the execution device 510, the execution device 510 may be further divided into an architecture shown in FIG. 5. As shown in the figure, the execution device 510 is configured with a computing module 511, an I/O interface 512, and a preprocessing module 513.

The I/O interface 512 is configured to exchange data with an external device. The user may input data into the I/O interface 512 through the terminal device 540. The input data may include an image or a video. In addition, the input data may alternatively be from the database 530.

The preprocessing module 513 is configured to perform preprocessing based on the input data received by the I/O interface 512. In this embodiment of this application, the preprocessing module 513 may be configured to identify an application scenario feature of application data received from the I/O interface 512.

In a process in which the execution device 510 preprocesses the input data, or in a process in which the computing module 511 in the execution device 510 performs related processing such as computing, the execution device 510 may invoke data, code, and the like in the data storage system 550 for corresponding processing, and may further store, in the data storage system 550, data, instructions, and the like that are obtained through corresponding processing.

For example, a first neural network stored in the execution device 510 may be applied to the execution device 510. After the execution device 510 obtains the application data, the computing module 511 inputs the application data into the first neural network to obtain a processing result. Because the first neural network is obtained by the training device 520 through training based on data that is obtained based on a class group and that has a similar application scenario feature, processing the application data by using the first neural network may meet a precision requirement of the user for data processing.

Finally, the I/O interface 512 returns the processing result to the terminal device 540, to provide the processing result for the user, so that the user can view the processing result. It should be understood that the terminal device 540 and the execution device 510 may alternatively be a same physical device.

In a case shown in FIG. 5, the user may manually provide input data and manual providing may be operated in an interface provided by the I/O interface 512. In another case, the terminal device 540 may automatically send the input data to the I/O interface 512. If the terminal device 540 is required to automatically send the input data, authorization from the user needs to be obtained, and the user may set corresponding permission in the terminal device 540. The user may view, on the terminal device 540, a processing result output by the execution device 510. The processing result may be specifically presented in a specific manner, for example, display, a sound, or an action. The terminal device 540 may also be used as a data collection terminal, collect the input data that is input into the I/O interface 512 and that is shown in the figure and the output processing result output from the I/O interface 512, use the input data and the output processing result as new sample data, and store the new sample data in the database 530. Certainly, alternatively, the terminal device 540 may not perform collection, and the I/O interface 512 directly uses the input data that is input into the I/O interface 512 and that is shown in the figure and the output processing result output from the I/O interface 512 as new sample data, and stores the new sample data in the database 530.

FIG. 5 is merely a schematic diagram of a system architecture according to an embodiment of this application. A location relationship between a device, a component, a module, and the like shown in FIG. 5 constitutes no limitation. For example, in FIG. 5, the data storage system 550 is an external memory relative to the execution device 510. In another case, the data storage system 550 may alternatively be disposed in the execution device 510.

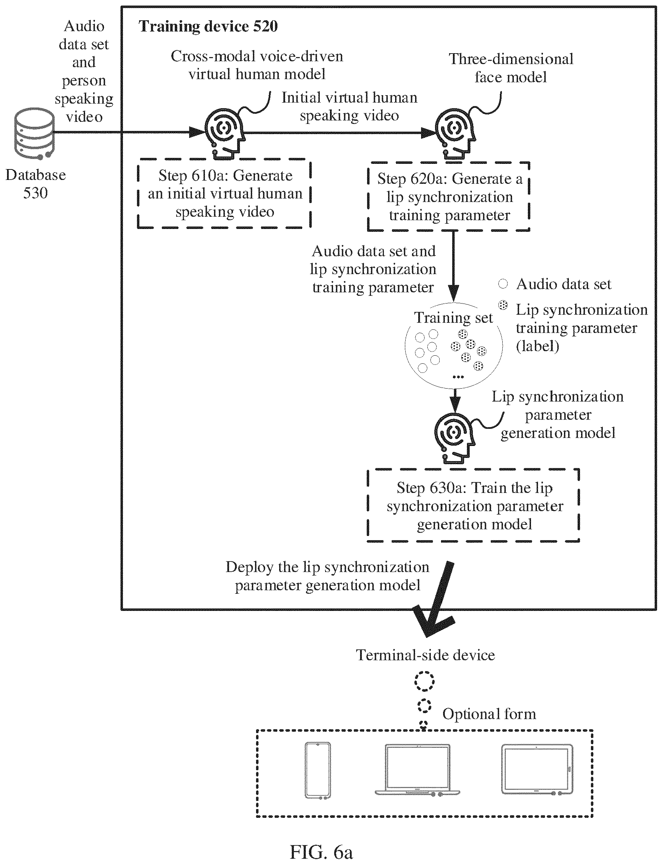

Refer to FIG. 6a. The following describes in detail a model training method for driving a virtual human to speak. Herein, the training device 520 in FIG. 5 is used as an example for description.

Step 610a: The training device 520 generates an initial virtual human speaking video based on an audio data set and a person speaking feature.

The training device 520 outputs, based on audio in the audio data set and the person speaking feature, the initial virtual human speaking video that matches a voice in the audio data set. The person speaking feature may be obtained from a person speaking video. The training device 520 may input the audio and the person speaking video into a cross-modal voice-driven virtual human model, and the cross-modal voice-driven virtual human model extracts the person speaking feature from the person speaking video, and outputs the initial virtual human speaking video based on the audio data set and the person speaking feature.

The person speaking video may be obtained by the training device 520 from a network database, or may be a real-person speaking video recorded by the training device 520 by using a camera. Duration of the person speaking video may be several minutes, for example, 3 minutes or 5 minutes.

The training device 520 uses the cross-modal voice-driven virtual human model to preprocess the person speaking video, to obtain the person speaking feature. The preprocessing may include cropping and feature extraction. For example, a person image and a background image exist in the person speaking video, and the person image includes a body part image and a face part image. The preprocessing of the cross-modal voice-driven virtual human model includes: cropping the face part image from the person speaking video, and extracting the person speaking feature from the face part image.

In addition, the training device 520 may also preprocess the person speaking video by using a program having cropping and feature extraction functions before inputting data into the cross-modal voice-driven virtual human model, and then input the audio data set and the person speaking feature that is obtained through preprocessing into the cross-modal voice-driven virtual human model.

The audio data set may include a plurality of lingual voices, a plurality of tone voices, and a plurality of content voices. Content in the plurality of content voices may be words, short sentences, long sentences, tones, and the like included in the voices. For example, the audio data set includes a voice of a male saying words such as "hello", "goodbye", and "sorry" in Chinese in a gentle tone, a voice of a female saying short sentences such as "please pay attention to network security" and "prohibited to send violation information" in English in a harsh tone, and a voice of a male saying long sentences such as "the concert is about to start, everyone, please hurry up" in French in a hurry tone. Frequencies of voices spoken by a male and a female may be different. Duration of a voice included in the audio data set may be dozens of hours, for example, 30 hours, 35 hours, or 50 hours.

Optionally, after obtaining the person speaking video, the training device 520 may extract audio data in the person speaking video, and add the audio data in the person speaking video to the audio data set.

In an optional implementation, the cross-modal voice-driven virtual human model is a lip synthesis model or a GAN model. The cross-modal voice-driven virtual human model is a pre-training model.

When a large quantity of real-person speaking videos are used for supervised model training, a large quantity of training materials, for example, a real-person speaking video whose duration is dozens of hours, need to be shot. A time period for collecting the training materials is long, shooting costs are high, and requirements for a sitting posture, an expression, an action, and a background of a shot person are strict. During recording, the person cannot make a big expression action, drink water, turn the head, and the like, and light reflection and the like also need to be considered to avoid during recording. Consequently, it is difficult to record the training materials, and insufficient training materials are obtained, resulting in poor generalization performance of the model obtained through training. In this embodiment, the training device 520 generates a large quantity of initial virtual human speaking videos by using the audio data set and a person speaking video with short duration. For collection of the audio data set, a person expression, an action, environment brightness, and the like do not need to be noted, thereby reducing difficulty in obtaining the training materials and ensuring sufficiency of the training materials.

Step 620a: The training device 520 determines a lip synchronization training parameter based on the initial virtual human speaking video.

The training device 520 maps a person speaking action in the initial virtual human speaking video to a three-dimensional face model, that is, makes an expression action in the three-dimensional face model consistent with a person speaking expression action in the initial virtual human speaking video, and then extracts the lip synchronization training parameter from the three-dimensional face model.

The lip synchronization training parameter is a parameter that indicates a feature of a speaking action performed by the three-dimensional face model. The lip synchronization training parameter may include an eye feature and a lip feature. The eye feature may include parameters that indicate eye actions such as eye opening, eye closing, an eye-opening size, and an eye viewing direction. The lip synchronization training parameter is used as a label for training a lip synchronization parameter generation model. Because the initial virtual human speaking video is generated based on the audio data set, and is not extracted based on a real-person speaking video, a set of lip synchronization training parameters may also be referred to as a pseudo label library.

In some possible embodiments, the lip feature parameter may include parameters that indicate mouth actions such as mouth opening, mouth closing, and a mouth opening size. For example, a person speaking feature corresponding to a voice of "ah" spoken by a person is a parameter indicating that a mouth is open and an eye is open, and a person speaking feature corresponding to a voice of "um" spoken by a person is a parameter indicating that a mouth is closed and an eye is closed.

In some other possible embodiments, the lip synchronization training parameter may further include a head feature parameter, an eyebrow feature parameter, and the like. For example, the head feature parameter may include parameters that indicate a head rotation angle and a rotation speed. The eyebrow feature parameter may include a parameter that indicates an eyebrow movement distance.

For example, the three-dimensional face model may be any pre-training three-dimensional model that can represent a face, for example, a variable face model. The variable face model is a three-dimensional face statistics model. The training device 520 can perform fitting with the three-dimensional face model based on the initial virtual human speaking video by using the variable face model, and extract the lip synchronization training parameter from the three-dimensional face model.

In an example in another possible implementation, the training device 520 may map the person speaking action in the initial virtual human speaking video to the three-dimensional face model by using any model having a fitting function, for example, a Bayesian forecasting model (Bayesian Forecasting Model) or a residual network model.

If the training device 520 directly extracts the lip synchronization training parameter from the initial virtual human speaking video, because expression details of speaking of a virtual human in the initial virtual human speaking video and overall movement naturalness are poor, a problem of low accuracy of the lip synchronization training parameter exists. The training device 520 maps the person speaking action in the initial virtual human speaking video to the three-dimensional face model, and then extracts the lip synchronization training parameter from the three-dimensional face model. This ensures accuracy of the lip synchronization training parameter.

Step 630a: The training device 520 trains the lip synchronization parameter generation model based on the audio data set and the lip synchronization training parameter.

The training device 520 uses the audio data set as input data, a lip synchronization parameter as output data and the lip synchronization training parameter as a supervision label, and trains the lip synchronization parameter generation model. The lip synchronization parameter is used to drive the virtual human to speak, to obtain a target virtual human speaking video. A parameter type included in the lip synchronization parameter is the same as that of the lip synchronization training parameter. Details are not described herein again. Optionally, a network structure of the lip synchronization parameter generation model may be a U-Net, a convolutional neural network, a long short term memory network, or the like.

The training device 520 generates the initial virtual human speaking video based on the audio data set, and determines the lip synchronization training parameter based on the initial virtual human speaking video. When definition (where for example, a resolution is $128 \times 128$) of the initial virtual human speaking video is lower than required definition (where for example, a resolution is $1280 \times 720$) of the target virtual human speaking video, the training device 520 can quickly generate a large quantity of initial virtual human speaking videos based on the audio data set, so that a large quantity of lip synchronization training parameters obtained based on the initial virtual human speaking video are used as a supervision label for model training. This improves a generalization capability of the lip synchronization parameter generation model, so that an expression action of a target virtual human driven by the lip synchronization parameter output by the model more synchronous with a voice in input audio. Therefore, a user obtains the lip synchronization parameter generation model through the training device 520, and only needs to record a small quantity of person speaking videos as input data, to complete training of the lip synchronization parameter generation model.

After the training device 520 obtains the lip synchronization parameter generation model through training, the training device 520 may configure the lip synchronization parameter generation model to a terminal-side device, for example, an execution device 510. The execution device 510 uses the lip synchronization parameter generation model to drive the virtual human to speak. The training device 520 and the execution device 510 may be a same computing device or different computing devices.

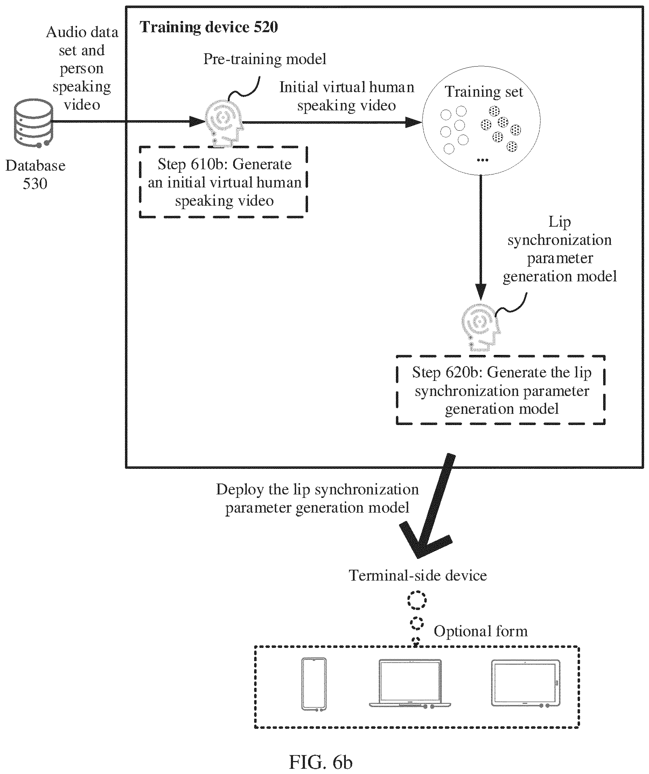

In addition to the model training method for driving a virtual human to speak shown in FIG. 6a, this embodiment further provides another model training method for driving a virtual human to speak. As shown in FIG. 6b, steps of the model training method for driving a virtual human to speak may be as follows:

Step 610b: The computing device 520 generates an initial virtual human speaking video based on an audio data set and a person speaking video.

The computing device 520 obtains, based on the audio data set and the person speaking video, the initial virtual human speaking video in which a person in the person speaking video is driven to speak based on a voice in the audio data set.

For example, the computing device 520 inputs the audio data set and the person speaking video into a pre-training model, and the pre-training model drives, based on the voice in the audio data set, the person in the person speaking video to speak, and outputs the initial virtual human speaking video.

The pre-training model may be a cross-modal voice-driven virtual human model, and duration of the person speaking video is less than duration of the voice in the audio data set. For a specific step of generating the initial virtual human speaking video, refer to step 610a in FIG. 6a. Details are not described herein again.

Step 620b: The computing device 520 generates a lip synchronization parameter generation model by using the initial virtual human speaking video.

The computing device 520 generates the lip synchronization parameter generation model by using the initial virtual human speaking video and a three-dimensional face reconstruction model. For example, the computing device 520 extracts a lip synchronization training parameter from the initial virtual human speaking video by using the three-dimensional face reconstruction model, obtains the lip synchronization parameter generation model through training by using the lip synchronization training parameter as a label and using the audio data set as model input data. For a specific step in which the computing device 520 extracts the lip synchronization training parameter from the initial virtual human speaking video by using the three-dimensional face reconstruction model, refer to content in step 620a in FIG. 6a. For a specific step in which the computing device 520 uses the lip synchronization training parameter as the label and the audio data set as the model input data, to obtain the lip synchronization parameter generation model through training, refer to step 630a in FIG. 6a. Details are not described herein again.

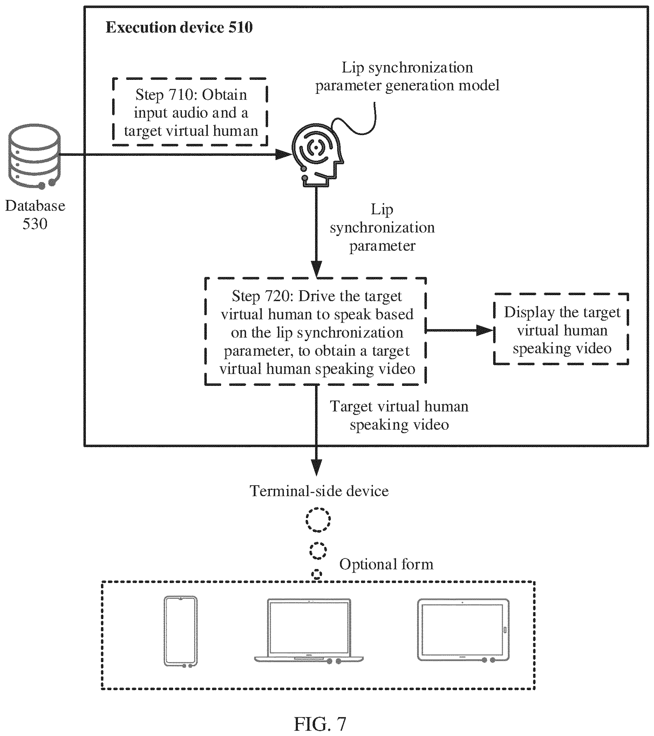

Next, refer to FIG. 7. Steps of the method for driving a virtual human to speak performed by the execution device 510 are described in detail.

Step 710: The execution device 510 obtains input audio and a person speaking video with first definition.

The execution device 510 may read the input audio from a network database or a local database, or may use person speaking audio collected by an audio recording device as the input audio.

A target virtual human is a virtual human that is driven by the input audio to speak in a to-be-generated target virtual human speaking video. The target virtual human may be generated by a lip synchronization parameter generation model based on the person speaking video with first definition.

Step 720: The execution device 510 generates the target virtual human speaking video based on the input audio by using a lip synchronization parameter generation model.

The execution device 510 inputs the input audio into the lip synchronization parameter generation model, outputs a lip synchronization parameter, and drives, based on the lip synchronization parameter, the target virtual human to speak.

A training set of the lip synchronization parameter generation model is obtained by using a video including the person speaking video with first definition and a three-dimensional face reconstruction model, and the first definition is lower than definition of the target virtual human speaking video. For specific steps, refer to step 610a to step 630a in FIG. 6a. The person speaking video with first definition may be the initial virtual human speaking video generated in step 610a in FIG. 6a. Details are not described herein again.

The lip synchronization parameter output by the lip synchronization parameter generation model is used to drive the target virtual human to speak, that is, drive the target virtual human to make an expression action matching the input audio. Parameter types included in the lip synchronization parameter and the lip synchronization training parameter are the same. Details are not described herein again.

The step of generating the target virtual human speaking video may include: The execution device 510 inputs the lip synchronization parameter into a virtual human generation model, where the virtual human generation model drives, based on the lip synchronization parameter, the target virtual human to speak, to obtain the target virtual human speaking video. The target virtual human speaking video output by the execution device 510 may include the input audio. Optionally, the virtual human generation model may be a U-Net-based neural network model.

For example, a person image of the virtual human is the same as a person image in the initial virtual human speaking video in step 610a in FIG. 6a.

Because the lip synchronization parameter generation model is obtained through training by using a large amount of audio data and a large quantity of lip synchronization training parameters, accuracy of the lip synchronization parameter output by the lip synchronization parameter generation model is high, and a generalization capability of the lip synchronization parameter generation model is ensured, thereby improving lip synchronization between a speaking action of the target virtual human driven by the lip synchronization parameter and the input audio.

After obtaining the output target virtual human speaking video, the execution device 510 may further send the target virtual human speaking video to a terminal-side device, so that the terminal-side device plays the target virtual human speaking video to a user. In a scenario in which the terminal-side device plays the target virtual human speaking video to the user, for example, a display in an office hall plays the target virtual human speaking video, the target virtual human may be a virtual lobby manager, and the target virtual human speaking video may be a virtual lobby manager speaking video. The display plays the virtual lobby manager speaking video while playing virtual lobby manager speaking audio, and the audio played by the display is lip synchronous with an expression action of the virtual lobby manager in the video. In an optional implementation, when the execution device 510 performs the step of driving the target virtual human to speak in the method for driving a virtual human to speak, the execution device 510 may further use the input audio as an update audio data set, to replace the audio data set in step 610a with the update audio data set, perform step 610a and step 620a again to obtain a fine-tuning lip synchronization training parameter, and update the lip synchronization parameter generation model based on the fine-tuning lip synchronization training parameter.

In another optional implementation, the execution device 510 may use audio data that is in the input audio and that is different from that in the audio data set as audio data in the update audio data set. The execution device 510 may determine an audio difference between each piece of audio data in the input audio and each piece of audio data in the audio data set; and if the audio difference is greater than a threshold, add the piece of audio data in the input audio to the update audio data set. Optionally, the execution device 510 may obtain the audio difference between the two pieces of audio data by using a dynamic time warping (Dynamic Time Warping, DTW) algorithm and a Mel frequency cepstrum coefficient (Mel Frequency Cepstrum Coefficient, MFCC) algorithm.

The execution device 510 uses the fine-tuning lip synchronization training parameter as a pseudo label to fine-tune the lip synchronization parameter generation model, to complete updating the lip synchronization parameter generation model. Optionally, a manner in which the execution device 510 updates the lip synchronization parameter generation model is to fine-tune a weight of a last layer or a plurality of last layers in a hierarchical structure of the lip synchronization parameter generation model.

In this embodiment, the execution device 510 fine-tunes the lip synchronization parameter generation model in a process of using the lip synchronization parameter generation model. This improves accuracy of the lip synchronization parameter generation model for generating the lip synchronization parameter for the input audio, and improves a generalization capability of the lip synchronization parameter generation model.

It may be understood that, to implement the functions in the foregoing embodiments, the execution device 510

and the training device 520 may be a same terminal or different terminals, and the terminal includes corresponding hardware structures and/or software modules for performing the functions. A person skilled in the art should be easily aware that, in combination with the examples described in embodiments disclosed in this application, units and method steps may be implemented by hardware or a combination of hardware and computer software in this application. Whether a function is performed by hardware or hardware driven by computer software depends on a particular application scenario and a design constraint of the technical solutions.

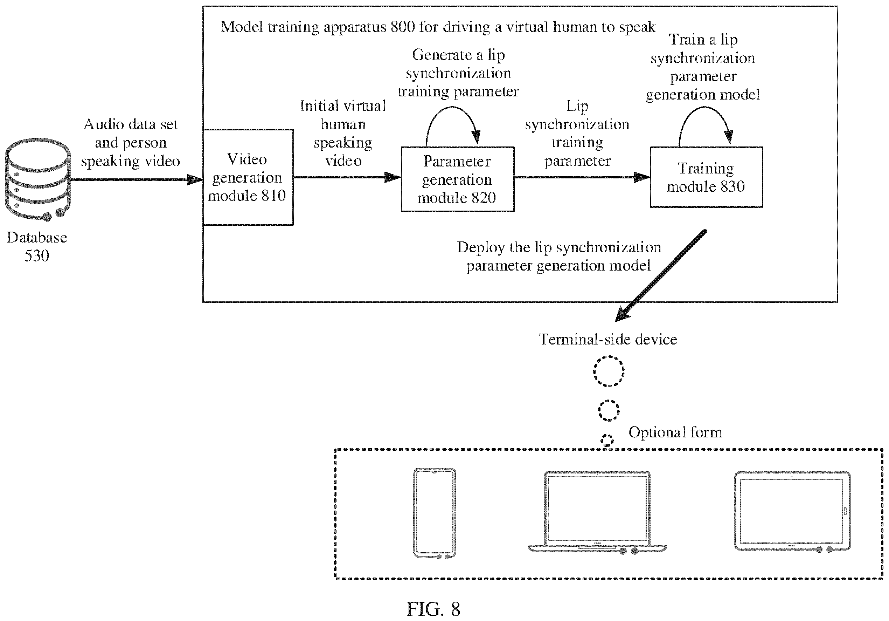

With reference to FIG. 6, the foregoing describes in detail the model training method for driving a virtual human to speak according to embodiments. With reference to FIG. 8, the following describes a model training apparatus for driving a virtual human to speak according to embodiments.

FIG. 8 is a schematic diagram of a possible model training apparatus for driving a virtual human to speak according to an embodiment. The model training apparatus for driving a virtual human to speak may be configured to implement functions of the execution device in the foregoing method embodiments, and therefore can also implement beneficial effects of the foregoing method embodiments. In this embodiment, the model training apparatus for driving a virtual human to speak may be the training device 520 shown in FIG. 5, or may be a module (for example, a chip) used in a server.

The model training apparatus 800 for driving a virtual human to speak includes a video generation module 810, a parameter generation module 820, and a training module 830. The model training apparatus 800 for driving a virtual human to speak is configured to implement functions of the computing device in the method embodiments shown in FIG. 6a and FIG. 6b.

The video generation module 810 is configured to generate an initial virtual human speaking video based on an audio data set and a person speaking video.

The parameter generation module 820 is configured to determine a lip synchronization training parameter based on the initial virtual human speaking video, where the lip synchronization training parameter is used as a label for training the lip synchronization parameter generation model.

The training module 830 is configured to train the lip synchronization parameter generation model based on the audio data set and the lip synchronization training parameter, where the lip synchronization parameter generation model is used to generate a lip synchronization parameter based on input audio, and the lip synchronization parameter is used to drive a virtual human to speak, to obtain a virtual human speaking video.

Optionally, the audio data set includes a plurality of lingual voices, a plurality of tone voices, and a plurality of content voices.

Optionally, definition of the initial virtual human speaking video is lower than definition of the virtual human speaking video.

Optionally, the lip synchronization parameter includes an eye feature parameter and a lip feature parameter.

Optionally, the model training apparatus 800 for driving a virtual human to speak further includes a preprocessing module. The preprocessing module is configured to preprocess the person speaking video to obtain a person speaking feature, where the preprocessing includes cropping and feature extraction, and the person speaking feature includes an eye feature and a lip feature.

Optionally, the audio data set includes audio in the person speaking video.

It should be noted that, in some embodiments, if another module division manner is used, functions of the parameter generation module 820 and the training module 830 may both be implemented by the training module 830.

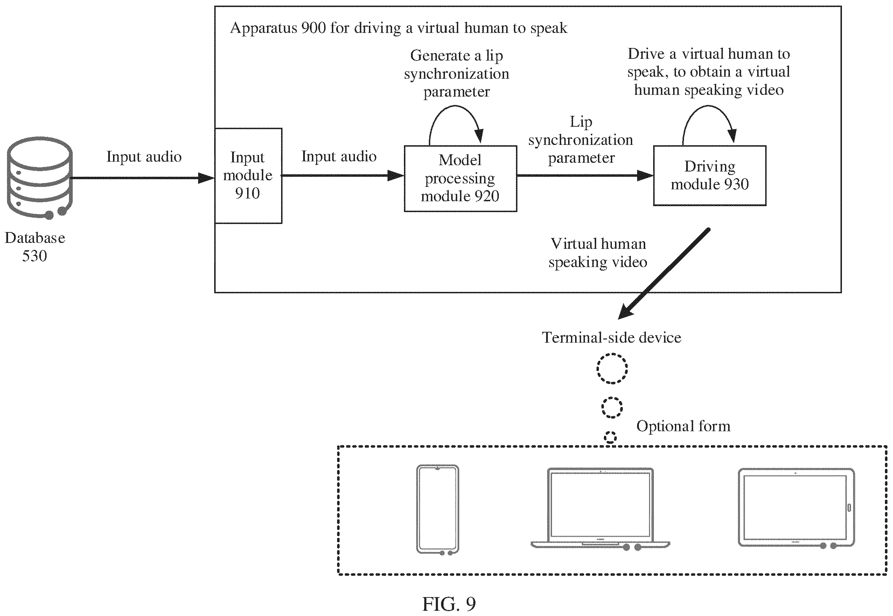

With reference to FIG. 7, the foregoing describes in detail the method for driving a virtual human to speak according to embodiments. With reference to FIG. 9, the following describes an apparatus for driving a virtual human to speak according to embodiments.

FIG. 9 is a schematic diagram of a possible apparatus for driving a virtual human to speak according to an embodiment. The apparatus for driving a virtual human to speak may be configured to implement functions of the execution device in the foregoing method embodiments, and therefore can also implement beneficial effects of the foregoing method embodiments. In this embodiment, the apparatus for driving a virtual human to speak may be the execution device 510 shown in FIG. 5, or may be a module (for example, a chip) used in a server.

The apparatus 900 for driving a virtual human to speak includes an input module 910, a model processing module 920, and a driving module 930. The apparatus 900 for driving a virtual human to speak is configured to implement functions of the computing device in the method embodiment shown in FIG. 7.

The input module 910 is configured to obtain input audio.

The model processing module 920 is configured to input the input audio into a lip synchronization parameter generation model, and output a lip synchronization parameter, where the lip synchronization parameter generation model is obtained through training based on an audio data set and a lip synchronization training parameter.

The driving module 930 is configured to drive, based on the lip synchronization parameter, a virtual human to speak, to obtain a virtual human speaking video.

Optionally, the apparatus for driving a virtual human to speak 900 further includes a training module. The training module is configured to update the lip synchronization parameter generation model based on the input audio.

It should be noted that, in some embodiments, if another module division manner is used, functions of the model processing module 920 and the driving module 930 may be implemented by the model processing module 920.

It should be understood that the model training apparatus 800 for driving a virtual human to speak and the apparatus 900 for driving a virtual human to speak in embodiments of this application may be implemented by using a GPU, an NPU, an ASIC, or a programmable logic device (programmable logic device, PLD). The PLD may be a complex program logic device (complex programmable logic device, CPLD), a field programmable gate array (field programmable gate array, FPGA), a generic array logic (generic array logic, GAL), or any combination thereof. When the method shown in FIG. 4 or FIG. 5 may alternatively be implemented by using software, the model training apparatus 800 for driving a virtual human to speak, the apparatus 900 for driving a virtual human to speak, and the modules thereof may alternatively be software modules.

The model training apparatus 800 for driving a virtual human to speak and the apparatus 900 for driving a virtual human to speak according to embodiments of this application may correspondingly perform the methods described in embodiments of this application, and the foregoing and other operations and/or functions of the units in the model training apparatus 800 for driving a virtual human to speak and the apparatus 900 for driving a virtual human to speak are respectively used to implement corresponding procedures of the methods in FIG. 6 or FIG. 7. For brevity, details are not described herein again.

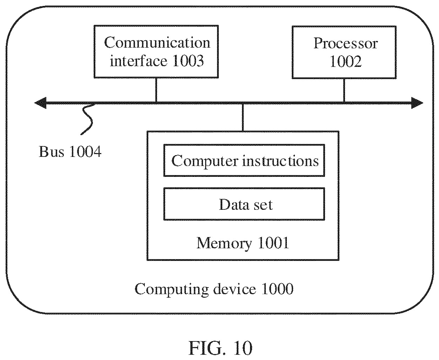

An embodiment of this application further provides a computing device. FIG. 10 is a schematic diagram of a structure of a computing device according to an embodiment of this application. The computing device 1000 includes a memory 1001, a processor 1002, a communication interface 1003, and a bus 1004. The memory 1001, the processor 1002, and the communication interface 1003 are communicatively connected to each other through the bus 1004.

The memory 1001 may be a read-only memory, a static storage device, a dynamic storage device, or a random access memory. The memory 1001 may store computer instructions. When the computer instructions stored in the memory 1001 are executed by the processor 1002, the processor 1002 and the communication interface 1003 are configured to perform steps in a model training method for driving a virtual human to speak and a method for driving a virtual human to speak in a software system. The memory may further store a data set. For example, a part of storage resources in the memory 1001 are divided into an area, and the area is used to store a program for implementing a function of the lip synchronization parameter generation model in this embodiment of this application.

The processor 1002 may be a general-purpose CPU, an application-specific integrated circuit (application-specific integrated circuit, ASIC), a GPU, or any combination thereof. The processor 1002 may include one or more chips. The processor 1002 may include an AI accelerator, for example, an NPU.

The communication interface 1003 uses a transceiver module, for example, but not limited to a transceiver, to implement communication between the computing device 1000 and another device or a communication network. For example, an iterative training request may be obtained through the communication interface 1003, and a neural network after iterative training may be fed back.

The bus 1004 may include a path for transferring information between various components (for example, the memory 1001, the processor 1002, and the communication interface 1003) of the computing device 1000.

The computing device 1000 may be a computer (for example, a server) in a cloud data center, or a computer or a terminal in an edge data center.

A function of the training device 520 may be deployed on each computing device 1000. For example, the GPU is configured to implement the function of the training device 520.

For a function of the training device 520 and a function of the execution device 510 that are deployed in a same computing device 1000, the training device 520 may communicate with the execution device 510 through the bus 1004.

For a function of the training device 520 and a function of the execution device 510 that are deployed in different computing devices 1000, the training device 520 may communicate with the execution device 510 through a communication network.

The method steps in embodiments of this application may be implemented by hardware, or may be implemented by a processor executing software instructions. The software instructions may include corresponding software modules. The software modules may be stored in a random access memory (random access memory, RAM), a flash memory, a read-only memory (read-only memory, ROM), a programmable read-only memory (Programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in a terminal device. Certainly, the processor and the storage medium may exist in a network device or a terminal device as discrete components.

All or some of the foregoing embodiments may be implemented by software, hardware, firmware, or any combination thereof. When the software is used to implement embodiments, all or some embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A model training method for driving a virtual human to speak, comprising:

   generating an initial virtual human speaking video based on an audio data set and a person speaking video, wherein duration of the initial virtual human speaking video is greater than duration of the person speaking video; and
   generating a lip synchronization parameter generation model by using the initial virtual human speaking video, wherein the lip synchronization parameter generation model is used to obtain a target virtual human speaking video, and definition of the initial virtual human speaking video is lower than definition of the target virtual human speaking video.

2. The method according to claim 1, wherein the generating a lip synchronization parameter generation model by using the initial virtual human speaking video comprises:
   generating the lip synchronization parameter generation model by using the initial virtual human speaking video and a three-dimensional face reconstruction model.

3. The method according to claim 2, wherein the generating the lip synchronization parameter generation model by using the initial virtual human speaking video and a three-dimensional face reconstruction model comprises:

   extracting a lip synchronization training parameter from the initial virtual human speaking video by using the three-dimensional face reconstruction model; and
   obtaining the lip synchronization parameter generation model through training by using the lip synchronization training parameter as a label and using the audio data set as model input data.

4. The method according to any one of claims 1 to 3, wherein the generating an initial virtual human speaking video based on an audio data set and a person speaking video comprises:
   inputting the audio data set and the person speaking video into a pre-training model, to obtain the initial virtual human speaking video in which a person in the person speaking video is driven to speak based on a voice in the audio data set, wherein the duration of the person speaking video is less than duration of the voice in the audio data set.

5. The method according to claim 4, wherein the pre-training model is used to extract a person speaking feature from the person speaking video, and output the initial virtual human speaking video based on the audio data set and the person speaking feature.

6. The method according to claim 4 or 5, wherein the duration of the person speaking video is less than or equal to 5 minutes, and the duration of the initial virtual human speaking video is greater than or equal to 10 hours.

7. The method according to any one of claims 1 to 6, wherein the audio data set comprises a plurality of lingual voices, a plurality of tone voices, and a plurality of content voices.

8. The method according to any one of claims 1 to 7, wherein a lip synchronization parameter comprises an eye feature parameter and a lip feature parameter.

9. The method according to any one of claims 1 to 8, wherein the audio data set comprises audio in the person speaking video.

10. A method for driving a virtual human to speak, comprising:

obtaining input audio and a person speaking video with first definition; and
generating a target virtual human speaking video based on the input audio by using a lip synchronization parameter generation model, wherein a training set of the lip synchronization parameter generation model is obtained based on a video that comprises the person speaking video with first definition, the first definition is lower than definition of the target virtual human speaking video, and the target virtual human speaking video is obtained based on the person speaking video with first definition.

11. The method according to claim 10, wherein before the generating a target virtual human speaking video based on the input audio by using a lip synchronization parameter generation model, the method further comprises: updating the lip synchronization parameter generation model.

12. The method according to claim 11, wherein the updating the lip synchronization parameter generation model comprises:

generating an initial virtual human speaking video based on the input audio and the person speaking video with first definition, wherein duration of the initial virtual human speaking video is greater than duration of the target virtual human speaking video; and
updating the lip synchronization parameter generation model by using the initial virtual human speaking video.

13. A model training apparatus for driving a virtual human to speak, comprising:

a video generation module, configured to generate an initial virtual human speaking video based on an audio data set and a person speaking video, wherein duration of the initial virtual human speaking video is greater than duration of the person speaking video; and
a training module, configured to generate a lip synchronization parameter generation model by using the initial virtual human speaking video, wherein the lip synchronization parameter generation model is used to obtain a target virtual human speaking video, and definition of the initial virtual human speaking video is lower than definition of the target virtual human speaking video.

14. The apparatus according to claim 13, wherein the training module is specifically configured to: generate the lip synchronization parameter generation model by using the initial virtual human speaking video and a three-dimensional face reconstruction model.

15. The apparatus according to claim 14, wherein the training module is specifically configured to:

extract a lip synchronization training parameter from the initial virtual human speaking video by using the three-dimensional face reconstruction model; and
obtain the lip synchronization parameter generation model through training by using the lip synchronization training parameter as a label and using the audio data set as model input data.

16. The apparatus according to any one of claims 13 to 15, wherein the video generation module is specifically configured to:
input the audio data set and the person speaking video into a pre-training model, to obtain the initial virtual human speaking video in which a person in the person speaking video is driven to speak based on a voice in the audio data set, wherein the duration of the person speaking video is less than duration of the voice in the audio data set.

17. The apparatus according to claim 16, wherein the pre-training model is used to extract a person speaking feature from the person speaking video, and output the initial virtual human speaking video based on the audio data set and the person speaking feature.

18. The apparatus according to claim 16 or 17, wherein the duration of the person speaking video is less than or equal to 5 minutes, and the duration of the initial virtual human speaking video is greater than or equal to 10 hours.

19. The apparatus according to any one of claims 13 to 18, wherein the audio data set comprises a plurality of lingual voices, a plurality of tone voices, and a plurality of content voices.

20. The apparatus according to any one of claims 13 to 19, wherein a lip synchronization parameter comprises an eye feature parameter and a lip feature parameter.

21. The apparatus according to any one of claims 13 to 20, wherein the audio data set comprises audio in the person speaking video.

22. An apparatus for driving a virtual human to speak, comprising:

an input module, configured to obtain input audio and a person speaking video with first definition; and
a model processing module, configured to generate a target virtual human speaking video based on the input audio by using a lip synchronization parameter generation model, wherein a training set of the lip synchronization parameter generation model is obtained based on a video that comprises the person speaking video with first definition, the first definition is lower than definition of the target virtual human speaking video, and the target virtual human speaking video is obtained based on the person speaking video with first definition.

23. The apparatus according to claim 22, wherein the apparatus further comprises a training module, and the training module is configured to:
update the lip synchronization parameter generation model.

24. The apparatus according to claim 23, wherein the training module is specifically configured to:

generate an initial virtual human speaking video based on the input audio and the person speaking video with first definition, wherein duration of the initial virtual human speaking video is greater than duration of the target virtual human speaking video; and
update the lip synchronization parameter generation model by using the initial virtual human speaking video.

25. A computing device, comprising a processor and a memory, wherein the memory is configured to store computer instructions; and when the processor executes the instructions, the computing device is enabled to perform the model training method for driving a virtual human to speak according to any one of claims 1 to 9, or the method for driving a virtual human to speak according to any one of claims 10 to 12.

26. A system for driving a virtual human to speak, comprising: a training device and a terminal, wherein the training device is connected to the terminal, the training device is configured to perform the model training method for driving a virtual human to speak according to any one of claims 1 to 9, and the terminal is configured to perform the method for driving a virtual human to speak according to any one of claims 10 to 12.

FIG. 1

Convolutional neural network 200

Neural network layer 230

Output layer 240

Hidden layer n (layer 23n)

Hidden layer 2 (layer 232)

Hidden layer 1 (layer 231)

Convolutional layer/Pooling layer 220

Layer 226

Layer 225

Layer 224

Layer 223

Layer 222

Layer 221

Input layer 210

FIG. 2

FIG. 3

FIG. 4

FIG. 5

Audio data set and person speaking video

**Training device 520**

Cross-modal voice-driven virtual human model

Three-dimensional face model

Initial virtual human speaking video

Database 530

Step 610a: Generate an initial virtual human speaking video

Step 620a: Generate a lip synchronization training parameter

Audio data set and lip synchronization training parameter

○ Audio data set

⊕ Lip synchronization training parameter (label)

Training set

Lip synchronization parameter generation model

Step 630a: Train the lip synchronization parameter generation model

Deploy the lip synchronization parameter generation model

Terminal-side device

Optional form

FIG. 6a

Audio data set and person speaking video

Database 530

Training device 520

Pre-training model

Initial virtual human speaking video

Step 610b: Generate an initial virtual human speaking video

Training set

...

Lip synchronization parameter generation model

Step 620b: Generate the lip synchronization parameter generation model

Deploy the lip synchronization parameter generation model

Terminal-side device

Optional form

FIG. 6b

**Execution device 510**

Lip synchronization
parameter generation model

Step 710: Obtain
input audio and a
target virtual human

Database
530

Lip
synchronization
parameter

Step 720: Drive the target
virtual human to speak based
on the lip synchronization
parameter, to obtain a target
virtual human speaking video

Display the target
virtual human
speaking video

Target virtual human
speaking video

Terminal-side device

Optional form

FIG. 7

Model training apparatus 800 for driving a virtual human to speak

Train a lip synchronization parameter generation model

Generate a lip synchronization training parameter

Audio data set and person speaking video

Database 530

Initial virtual human speaking video

Lip synchronization training parameter

Video generation module 810

Parameter generation module 820

Training module 830

Deploy the lip synchronization parameter generation model

Terminal-side device

Optional form

EP 4 394 716 A1

FIG. 8

FIG. 9

FIG. 10

**EP 4 394 716 A1**

## INTERNATIONAL SEARCH REPORT

| International application No. |
| --- |
| **PCT/CN2022/098739** |

**A.    CLASSIFICATION OF SUBJECT MATTER**

G06T 17/00(2006.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

VEN, CNTXT, USTXT, CNKI: 视频, 帧, 虚拟人, 说话, 模型, 训练, 同步, 脸, 唇, 音频, 语音, 神经网络, face, video, network, frame, neural, model, train+, audio, voice, virtual, human, image

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113192161 A (RESEARCH INSTITUTE OF TSINGHUA, PEARL RIVER DELTA et al.) 30 July 2021 (2021-07-30) description, paragraphs 0063-0155 | 1-26 |
| A | CN 113851131 A (GUANGZHOU INSTITUTE OF TECHNOLOGY, XIDIAN UNIVERSITY) 28 December 2021 (2021-12-28) entire document | 1-26 |
| A | CN 112001992 A (SUPERVIEW (BEIJING) MEDIA TECHNOLOGY CO., LTD.) 27 November 2020 (2020-11-27) entire document | 1-26 |
| A | CN 113783771 A (YIWISE TECHNOLOGY LIMITED) 10 December 2021 (2021-12-10) entire document | 1-26 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 December 2022** | **26 December 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

32

**INTERNATIONAL SEARCH REPORT**
Information on patent family members

International application No.

**PCT/CN2022/098739**

| Patent document cited in search report | | | Publication date (day/month/year) | Patent family member(s) | Publication date (day/month/year) |
|---|---|---|---|---|---|
| CN | 113192161 | A | 30 July 2021 | None | |
| CN | 113851131 | A | 28 December 2021 | None | |
| CN | 112001992 | A | 27 November 2020 | None | |
| CN | 113783771 | A | 10 December 2021 | None | |

Form PCT/ISA/210 (patent family annex) (January 2015)

**REFERENCES CITED IN THE DESCRIPTION**

**Patent documents cited in the description**

- CN 202210326144